# EUROPEAN PATENT APPLICATION

(11) **EP 1 988 415 A2**
(43) Date of publication of application: **05.11.2008**
(21) Application number: 08008143.3
(22) Date of filing: 28.04.2008
(51) Int. Cl.: G02B 6/132

(54) **Manufacturing method of optical waveguide**

(30) Priority: 01.05.2007 JP 2007120891
(71) Applicant: NITTO DENKO CORPORATION, Ibaraki, Osaka 587-8680 (JP)
(72) Inventor: Khan, Sazzadur Rahman, Ibaraki-shi Osaka 567-8680 (JP)
(74) Representative: Kuhnen & Wacker

(57) **Abstract**

A method of manufacturing an optical waveguide which is capable of preventing upper portions of cores from bulging widthwise when the cores are made high. After coating the surface of an under-cladding layer (2) and the like with an ultra violet curable resin, a resulting coating layer (3a) is irradiated with ultraviolet light (L) having a wavelength within the range of 330 to 400 nm in a predetermined pattern, and an irradiated portion

## Description

### BACKGRROUND OF THE INVENTION

### 1. Field of the Invention

The present invention relates to a method of manufacturing an optical waveguide for widespread use in optical communications, optical information processing, and other general optics.

### 2. Description of the Related Art

An optical waveguide is incorporated in an optical device such as an optical waveguide device, an optical integrated circuit, an optical wiring board and the like, and is widely used in the field of optical communications, optical information processing, and other general optics. An example of the optical waveguide is an optical waveguide having a triple layer structure such that cores are formed in a predetermined pattern on an under-cladding layer and an over-cladding layer is formed to cover the cores (see, for example, JapaneseUnexaminedPatent Publication No. 2005-173039).

The patterning of the cores is carried out by using an ultraviolet curable resin as a material for the formation of cores. The ultraviolet curable resin is applied, for example, onto the under-cladding layer, and is then exposed to ultraviolet light through a photomask formed with an opening pattern corresponding to the core pattern. An exposed portion of the ultraviolet curable resin is cured to form cores. Thereafter, development is performed to dissolve and remove an unexposed portion, thereby forming the core pattern.

As electronic optical devices become smaller in size, there has recently been a need to make optical waveguides finer (to make the pitch of the core pattern smaller). On the other hand, in the connection between an optical waveguide and an optical component, it is considered more advantageous for accurate transmission of light exiting from cores, to increase the height of cores because the greater core height leads to the greater height of optical beams.

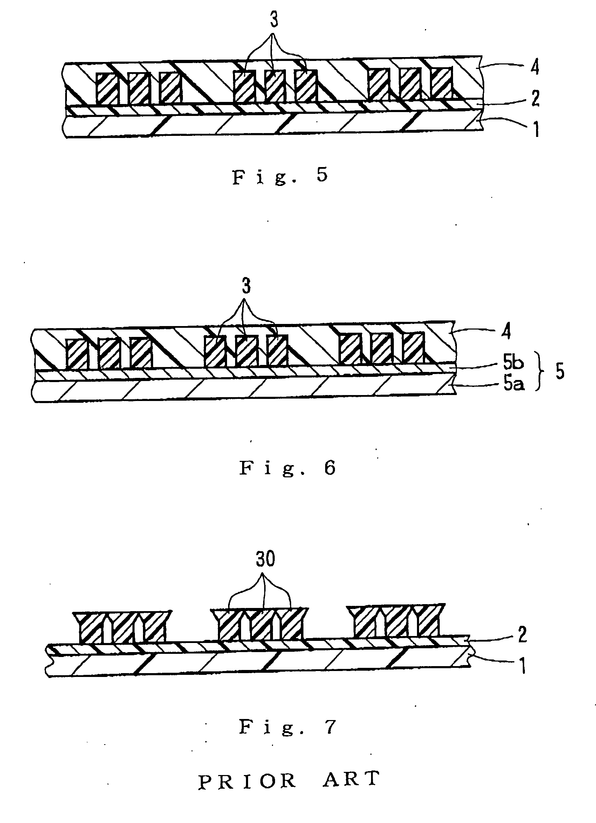

However, where the optical waveguide is made finer (or the pitch of the core pattern is made smaller), merely increasing the height of cores causes a problem such that upper portions of cores 30 bulge widthwise and adjacent ones of the cores 30 come in contact with each other at the upper portions thereof, after the exposure, as shown in Fig. 7. The contact between the adjacent cores 30 interferes with light transmission. In Fig. 7, the reference numeral 1 designates a base for the manufacture of the optical waveguide, and the reference numeral 2 designates an under-cladding layer.

### SUMMARY OF THE INVENTION

In view of the foregoing, it is an object of the present invention to provide a method of manufacturing an optical waveguide which is capable of preventing an upper portion of a core from bulging widthwise when the core is made high.

To accomplish the obj ect, a method of manufacturing an optical waveguide according to the present invention includes the steps of coating a surface of a planer base body with an ultraviolet curable resin, then irradiating a resulting coating layer with ultraviolet light in a predetermined pattern, and curing an irradiated portion of the coating layer to form cores, wherein the ultraviolet light has a wavelength within the range of 330 to 400 nm.

The present inventor has made studies on the cause of the bulging of upper portions of cores in a widthwise direction thereof when the cores are made high. As a result, the present inventor has found that the cause lies in the wavelength of ultraviolet light for irradiation. Typically, the ultraviolet light for irradiation is ultraviolet light from an ultraviolet irradiation apparatus (for example, MA-60Fmanufactured by Mikasa Co. , Ltd.). The wavelength of such ultraviolet light has wavelength peaks at 436 nm, 310 nm and 248 nm, with a dominant wavelength at 365 nm. The present inventor has found that the presence of ultraviolet light having a short wavelength such as 310 nm or 248 nm causes the bulging of the upper portions of cores in the widthwise direction. As a result of further studies, the present inventor has found that the use of ultraviolet light having a wavelength within the range of 330 to 400 nm as the ultraviolet light for irradiation can prevent the upper portions of cores from bulging in the widthwise direction even when the cores are made high. The present inventor has thus attained the present invention.

In the method of manufacturing the optical waveguide according to the present invention, the ultraviolet curable resin is irradiated with the ultraviolet light having a wavelength of 330 to 400 nm when forming the cores, whereby the upper portions of the cores are prevented from bulging in the widthwise direction even when the cores are made high. As a result, there occurs no contact between the upper portions of adjacent cores even when the optical waveguide is made finer (or the pitch of the core pattern is made smaller).

### BRIEF DESCRIPTION OF THE DRAWINGS

Fig. 1 is a sectional view schematically showing one preferred embodiment of a method of manufacturing an optical waveguide according to the present invention.

Fig. 2 is a sectional view schematically showing the method of manufacturing an optical waveguide.

Fig. 3 is a sectional view schematically showing the method of manufacturing an optical waveguide.

Fig. 4 is a sectional view schematically showing the method of manufacturing an optical waveguide.

Fig. 5 is a sectional view schematically showing the method of manufacturing an optical waveguide.

Fig. 6 is a sectional view schematically showing another preferred embodiment of the method of manufacturing an optical waveguide according to the present invention.

Fig. 7 is a sectional view schematically showing a conventional method of manufacturing an optical waveguide.

### DETAILED DESCRIPTION OF PREFERRED EMBODIMENTS

Preferred embodiments according to the present invention will now be described in detail with reference to the drawings.

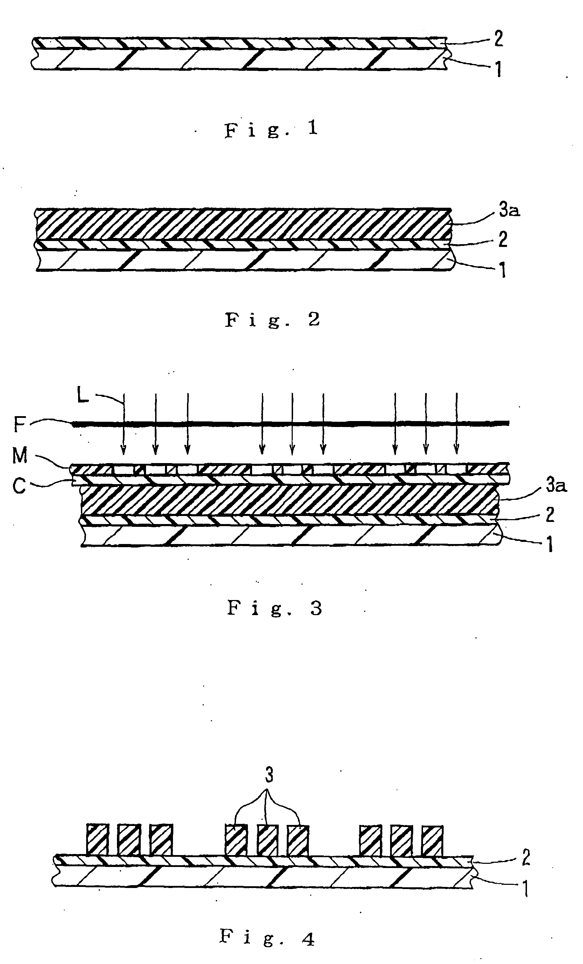

Figs. 1 through 5 show one preferred embodiment, of the method of manufacturing an optical waveguide according to the present invention. In this embodiment where an optical waveguide including an under-cladding layer 2, cores 3 and an over-cladding layer 4 are formed on the surface of a base 1 (see Fig. 5), an ultraviolet curable resin is used as a material for the formation of the cores 3, and a coating layer 3a is formed by coating of this ultraviolet curable resin (see Fig. 3). The coating layer 3a is irradiated with ultraviolet light L (see Fig. 3) having a wavelength within the range of 330 to 400 nm (see Fig. 3). This is a characteristic feature of the present invention.

Description will be given in further detail. First, the planar base 1 for the manufacture of the optical waveguide is prepared, as shown in Fig. 1. The base 1 is not particularly limited. Examples of a material for the formation of the base 1 include resin, glass, silicon, metal and the like. Examples of the resin include polypropylene, polyethylene, polyethylene naphthalate, polyester, polyacrylate, polycarbonate, polynorbornene, polyimide, and the like. The thickness of the base 1 is not particularly limited, but is generally set within the range of 20 *µ*m (film base 1) to 5 mm (plate base 1).

Next, the under-cladding layer 2 is formed on a predetermined region of the surface of the base 1. Examples of a material for the formation of the under-cladding layer 2 include polyimide resin, epoxy resin and photopolymerizable resin. The method of forming the under-cladding layer 2 is not particularly limited, but is executed, for example, by applying a varnish prepared by dissolving the resin in a solvent onto the base 1, and then curing the varnish. The application of the varnish is carried out, for example, by a spin coating method, a dipping method, a casting method, an injection method or an ink jet method. The curing is carried out as appropriate depending on the formation material and thickness of the under-cladding layer 2 and the like. For example, when a polyimide resin is used as the material for the formation of the under-cladding layer 2, the curing is carried out by a heating treatment at 300°C to 400°C for 60 to 180 minutes. When a photopolymerizable resin is used as the material for the formation of the under-cladding layer 2, the curing is carried out by a heating treatment at 80 °C to 120 °C for 10 to 30 minutes after the irradiation with ultraviolet light at 1000 to 5000 mJ/cm². In general, the thickness of the under-cladding layer 2 is set within the range of 5 to 50 *µ*m for a multimode optical waveguide, and is set within the range of 1 to 20 *µ*m for a single-mode optical waveguide.

Next, as shown in Fig. 2, the coating layer 3a is formed by coating the surface of the under-cladding layer 2 with an ultraviolet curable resin which is a material for the formation of the cores 3 (see Fig. 4). This ultraviolet curable resin is a material having a refractive index greater than those of the materials respectively for the formation of the under-cladding layer 2 and the below-mentioned over-cladding layer 4 (see Fig. 5). The adjustment of the refractive index may be effected, for example, by adjusting the selection of the types of the materials for the formation of the under-cladding layer 2, the cores 3 and the over-cladding layer 4 described above and the composition ratio thereof. The formation of the coating layer 3a is not particularly limited, but is performed, for example, by applying a varnish prepared by dissolving an ultraviolet curable resin in a solvent onto the under-cladding layer 2, and then drying the varnish. The application of the varnish is carried out, for example, by a spin coating method, a dipping method, a casting method, an injection method, an ink jet method and the like in a manner similar to that described above. The drying is carried out by a heating treatment at 50°C to 120°C for 10 to 30 minutes.

As shown in Fig. 3, the surface of the coating layer 3a subjected to the drying is covered with a translucent cover film C, and a photomask M formed with an opening pattern corresponding to a desired pattern of the cores 3 (see Fig. 4) is placed on the cover film C. Thereafter, the coating layer 3a is irradiated with ultraviolet light L having a wavelength within the range of 330 to 400 nm through the photomask M and the cover film C. The irradiated portions become the cores 3 afterward. The ultraviolet light L having the above-mentioned specific wavelength is obtained by causing ultraviolet light L from a typical ultraviolet irradiation apparatus (for example, MA-60F manufactured by Mikasa Co. , Ltd. ) to pass through a filter F (for example, a band-pass filter manufactured by Opto-Line, Inc.) which is transparent only to specific wavelengths. A light source of the ultraviolet light L may be, for example, a low-pressure mercury-vapor lamp, a high-pressure mercury-vapor lamp or an ultra-high-pressure mercury-vapor lamp. The dose of the ultraviolet light L is generally 10 to 10000 mJ/cm², preferably 50 to 4000 mJ/cm².

After the exposure (the irradiation with the ultraviolet light L), the photomask M and the cover film C are removed. Thereafter, a heating treatment is performed to complete a photoreaction. This heating treatment is performed at 70°C to 250°C, preferably at 80°C to 200°C for 10 seconds to two hours, preferably for five minutes to one hour. Thereafter, development is performed using a developing solution to dissolve and remove an unexposed portion of the coating layer 3a, thereby patterning the coating layer 3a (see Fig. 4). A heating treatment is performed to remove the developing solution in the patterned coating layer 3a, thereby forming the cores 3 as shown in Fig. 4. In general, this heating treatment is performed at 80 °C to 120 °C for 10 to 30 minutes. The development is carried out by employing, for example, an immersion method, a spray method or a puddle method. The developing solution used herein is an organic solvent, an organic solvent containing an alkaline aqueous solution, or the like. The developing solution and the development conditions are selected as appropriate depending on the composition of the ultraviolet curable resin.

The dimensions of the cores 3 to be formed are not particularly limited. For a finer optical waveguide (or a core pattern with a smaller pitch), the width of the cores 3 is set within the range of 10 to 30 *µ*m, and the height (or thickness) of the cores 3 is set within the range of 15 to 90 *µ*m. The ratio of the width to the height of the cores 3 is set within the range of 1:1 to 1:5. The spacing (distance) between adjacent cores 3 is set within the range of 10 to 30 *µ*m. By this, the present invention enables prevention of the upper portions of the cores 3 from bulging widthwise even when the height of the cores 3 is made large relative to the width thereof. In this circumstance, there occurs no contact between the upper portions of the adjacent cores 3 even when the spacing between the adjacent cores 3 is made small.

Next, as shown in Fig. 5, a varnish which becomes the over-cladding layer 4 afterward is applied to cover the cores 3 by using a material similar to that of the under-cladding layer 2 in a same manner as applied for the under-cladding layer 2. The subsequent curing of the coating layer is also carried out in a same manner as for the formation of the under-cladding layer 2. For example, when a polyimide resin is used as the material for the formation of the over-cladding layer 4, a heating treatment is performed. When a photopolymerizable resin is used as the material for the formation of the over-cladding layer 4, the heating treatment is performed after the irradiation with ultraviolet light. This achieves the formation of the over-cladding layer 4 . The material for the formation of the over-cladding layer 4 includes a material similar to that of the under-cladding layer 2, but the material for the formation of the over-cladding layer 4 may be the same as or different from the material for the formation of the under-cladding layer 2. In general, the thickness of the over-cladding layer 4 is set within the range of 5 to 100 *µ*m for a multimode optical waveguide, and is set within the range of 1 to 20 *µ*m for a single-mode optical waveguide.

In this manner, the optical waveguide including the under-cladding layer 2, the cores 3 and the over-cladding layer 4 is formed on the surface of the base 1.

In using the optical waveguide, the base 1 may be separated from the under-cladding layer 2, or may be used together with the optical waveguide without being separated therefrom.

Fig. 6 shows another preferred embodiment of the method of manufacturing the optical waveguide according to the present invention. In this preferred embodiment, a base body 5 including a planar substrate 5a and a thin metal film 5b formed on the surface of the substrate 5a is used in place of the under-cladding layer 2, and the cores 3 and the over-cladding layer 4 are formed on the surface of the thin metal film 5b by the method of manufacturing a optical waveguide employed in the preceding preferred embodiment. The surface of the thin metal film 5b acts as a surface which reflects light passing through the cores 3. Other parts are similar to those of the preceding preferred embodiment, and like reference numerals and characters are used to designate such similar parts. This preferred embodiment produces functions and effects similar to those of the preceding preferred embodiment.

Description will be given in further detail. The substrate 5a is not particularly limited. Examples of the substrate 5a include a resin substrate, a glass substrate and a silicon substrate. Examples of a material for the formation of the resin substrate include polyethylene naphthalate, polyester, polyacrylate, polycarbonate, polynorbornene, and polyimide. The thickness of the substrate 5a is not particularly limited, but is generally set within the range of 2 to 5 mm.

The thin metal film 5b is formed by plating or vapor deposition. Examples of a material for the formation of the thin metal film 5b include nickel, copper, silver, gold, chromium, aluminum, zinc, tin, cobalt, tungsten, platinum, palladium, and an alloy material including at least two of these elements. The thickness of the thin metal film 5b is not particularly limited, but is generally set within the range of 50 nm to 5 *µ*m.

The method of manufacturing an optical waveguide according to this preferred embodiment includes preparing the planar substrate 5a, forming the thin metal film 5b on the surface of the substrate 5a by plating or vapor deposition, and forming the cores 3 and the over-cladding layer 4 on the surface of the thin metal film 5b in a same manner as in the preceding preferred embodiment. The mentioned optical waveguide is thus provided.

Although the over-cladding layer 4 is formed in each of the preferred embodiments, the over-cladding layer 4 is not essential and may be dispensed with for the formation of the optical waveguide in some cases. Additionally, a thin metal film similar to the thin metal film 5b (see Fig. 6) may be formed by plating or vapor deposition in place of the over-cladding layer 4.

Next, inventive examples will be described in conjunction with comparative examples. It should be noted that the present invention is not limited to the inventive examples.

### INVENTIVE EXAMPLE 1

### [Materials for Formation of Under-cladding Layer and Over-cladding Layer]

The materials for the formation of the under-cladding layer and the over-cladding layer were prepared by mixing together 35 parts by weight of bisphenoxyethanol fluorene diglycidyl ether (component A), 40 parts by weight of (3',4'-epoxycyclohexane) methyl 3',4'-epoxycyclohexyl-carboxylate (Celloxide 2021P manufactured by Daicel Chemical Industries, Ltd.) (component B), 25 parts by weight of an alicyclic epoxy resin (Celloxide 2081P manufactured by Daicel Chemical Industries, Ltd.) (component C) and one part by weight of a 50% propione carbonate solution of 4,4-bis[di(*β* -hydroxyethoxy)phenylsulfinio] phenylsulfide-bis-hexafluoroantimonate (photo-acid generator: component D).

### [Material for Formation of Cores]

The material for the formation of the cores was prepared by dissolving 70 parts by weight of the component A, 30 parts by weight of 1,3,3-tris{4-[2-(3-oxetanyl)]butoxyphenyl}butane and 0.5 part by weight of the component D in 28 parts by weight of ethyl lactate.

### [Production of Optical Waveguide]

First, the material for the formation of the under-cladding layer was applied to the surface of a polyethylene naphthalate film [the base: 120 mm x 120 mm x 188 *µ*m (thickness)] by a spin coating method. Thereafter, the ultraviolet irradiation apparatus (MA-60F manufactured by Mikasa Co., Ltd.) was used to perform irradiation with ultraviolet light at 2000 mJ/cm². Subsequently, a heating treatment was performed at 100 °C for 15 minutes to form the under-cladding layer (having a thickness of 20 *µ*m).

Next, the material for the formation of the cores was applied to the surface of the under-cladding layer by a spin coating method, and was dried at 100 °C for five minutes. Then, a translucent cover film made of polycarbonate (having a thickness of 40 *µ*m) was placed on the surface of the dried material for the formation of the cores, and a synthetic silica photomask formed with an opening pattern (core pattern) was placed on the surface of the cover film. Ultraviolet light having a wavelength of 355 to 375 nm was obtained by causing ultraviolet light irradiated from the ultraviolet irradiation apparatus to pass through a band-pass filter (manufactured by Opto-Line, Inc.). Thus obtained ultraviolet light was irradiated toward the photomask and the cover film at 4000 mJ/cm². Then, the photomask and the cover film were removed, and a heating treatment was performed at 80°C for 15 minutes. Next, development was carried out by using an aqueous solution of γ -butyrolactone to dissolve and remove an unexposed portion. Thereafter, a heating treatment was performed at 100°C for 15minutes to form the cores (20 /*µ*m in width, 80 *µ*m in height and 20 *µ*m in spacing between adjacent cores). The formed cores had a uniform height and there occurred no contact between the cores adjacent to each other.

Next, the material for the formation of the over-cladding layer was applied by a spin coating method to cover the cores, and was then irradiated with ultraviolet light at 2000 mJ/cm² using the ultraviolet irradiation apparatus. Subsequently, a heating treatment was performed at 120 °C for 15 minutes to form the over-cladding layer (having a thickness of 100 *µ*m as measured from the surface of the under-cladding layer).

In this manner, the optical waveguide was manufactured which includes the under-cladding layer, the cores and the over-cladding layer respectively stacked on the base in this ascending order.

### INVENTIVE EXAMPLE 2

In the conditions of Inventive Example 1 described above, a photomask having a different opening pattern was used to form cores having different dimensions (12 *µ*m in width, 48 *µ*m in height and 12 *µ*m in spacing between adjacent cores). Except for this, Inventive Example 2 was similar to Inventive Example 1 described above.

Inventive Example 2 also showed that the formed cores had a uniform height and there was no contact between the adjacent cores.

### INVENTIVE EXAMPLE 3

In the conditions of Inventive Example 1, another band-pass filter (manufactured by Opto-Line, Inc.) was used, whereby ultraviolet light to be irradiated to the coating layer of the material for the formation of the cores had a wavelength of 330 to 400 nm. Except for this, Inventive Example 3 was similar to Inventive Example 1.

Inventive Example 3 also showed that the formed cores had a uniform height and there was no contact between the adjacent cores.

### COMPARATIVE EXAMPLE 1

In the conditions of Inventive Example 1 described above, cores (having a height of 80 *µ*m) were formed by irradiation with ultraviolet light (having a wavelength of 240 to 440 nm) without using any band-pass filter. Except for this, Comparative Example 1 was similar to Inventive Example 1.

Comparative Example 1 showed that the upper portions of the formed cores bulged widthwise and the cores adjacent to each other contacted with each other.

### COMPARATIVE EXAMPLE 2

In the conditions of Inventive Example 2 described above, the cores (having a height of 48 *µ*m) were formed by irradiation with ultraviolet light (having a wavelength of 240 to 440 nm) without using any band-pass filter. Except for this, Comparative Example 2 was similar to Inventive Example 2.

Comparative Example 2 also showed that the upper portions of the formed cores bulged widthwise and the cores adjacent to each other contacted with each other.

### COMPARATIVE EXAMPLE 3

In the conditions of Inventive Example 3 described above, still another band-pass filter (manufactured by Opto-Line, Inc.) was used, whereby ultraviolet light to be irradiated to the coating layer of the material for the formation of the cores had a wavelength of 310 to 400 nm. Except for this, Comparative Example 3 was similar to Inventive Example 3.

Comparative Example 3 also showed that the upper portions of the formed cores bulged widthwise and the cores adjacent to each other contacted with each other.

It is known from the foregoing results of Inventive Examples 1 to 3 and Comparative Examples 1 to 3 that when the wavelength of ultraviolet light to be irradiated is set within the range of 330 to 400 nm as in Inventive Examples 1 to 3, the resulting cores have a uniform width in the height direction thereof, and when the ultraviolet light to be irradiated contains a wavelength less than 330 nm as in Comparative Examples 1 to 3, the resulting cores bulge widthwise at the upper portions thereof.

Although a specific form of embodiment of the instant invention has been described above and illustrated in the accompanying drawings in order to be more clearly understood, the above description is made by way of example and not as a limitation to the scope of the instant invention. It is contemplated that various modifications apparent to one of ordinary skill in the art could be made without departing from the scope of the invention which is to be determined by the following claims.

## Claims

1. A method of manufacturing an optical waveguide, comprising the steps of:
coating a surface of a planar base body with an ultraviolet curable resin;
irradiating a resulting coating layer with ultraviolet light in a predetermined pattern; and
curing an irradiated portion of the coating layer to form cores,
wherein the ultraviolet light has a wavelength within the range of 330 to 400 nm.

2. The method of manufacturing an optical waveguide according to claim 1, wherein the cores have a width within the range of 10 to 30 *µ*m and a height within the range of 15 to 90 *µ*m.

3. The method of manufacturing an optical waveguide according to claim 1 or 2, wherein the ratio between the width and the height of the cores is within the range of 1:1 to 1:5.

4. The method of manufacturing an optical waveguide according to any one of claims 1 to 3, wherein a spacing between the cores adjacent to each other is within the range of 10 to 30 *µ*m.
